# EUROPEAN PATENT SPECIFICATION

(11) **EP 4 686 963 B1**
(45) Date of publication and mention of the grant of the patent: **09.12.2026**
(21) Application number: 25192068.2
(22) Date of filing: 28.07.2025
(51) Int. Cl.: G02B 1/111

(54) **ANTI-REFLECTIVE BLACK PAINT COMPOSITION AND OPTICAL DEVICE**
ANTIREFLEXSCHWARZLACKZUSAMMENSETZUNG UND OPTISCHE VORRICHTUNG
COMPOSITION DE PEINTURE NOIRE ANTIREFLET ET DISPOSITIF OPTIQUE

(30) Priority: 30.07.2024 JP 2024123407
(43) Date of publication of application: 04.02.2026
(73) Proprietor: Dexerials Corporation, Shimotsuke-shi, Tochigi 323-0194 (JP)
(72) Inventor: TAKAHASHI, Hiroshi, Shimotsuke-shi, Tochigi, 323-0194 (JP); KOBAYASHI, Yukinori, Shimotsuke-shi, Tochigi, 323-0194 (JP)
(74) Representative: Hoffmann Eitle

(56) References cited:
- CN-A- 114 672 218
- JP-A- 2009 282 488
- JP-A- 2016 206 682
- US-A1- 20240 004 108
- CHEN JIE ET AL: "Synthesis and application of thermal latent initiators of epoxy resins: A review", vol. 137, no. 48, 6 September 2020 (2020-09-06), New York, XP093339234, ISSN: 0021-8995, Retrieved from the Internet <URL:https://onlinelibrary.wiley.com/doi/full-xml/10.1002/app.49592> DOI: 10.1002/app.49592

## Description

### TECHNICAL FIELD

The present invention relates to an anti-reflective black paint composition and an optical device. The present invention specifically relates to a black paint composition having an anti-reflective ability, and particularly relates to a black paint composition suitable for an interior and exterior of an ADAS (Advanced Driver-Assistance Systems) device.

### BACKGROUND ART

In recent years, with the advancement of improved safety and autonomous driving technology in automobiles, various types of sensors have come to be used extensively to achieve this. Among these, various cameras and LiDAR (Light Detection And Ranging, or Laser Imaging Detection And Ranging) devices are used as devices for optically collecting information such as a distance and direction of an object.

Members used in in-vehicle ADAS devices, specifically front cameras and LiDAR devices, are often made of aluminum due to its heat resistance, ease of processing, and cost. To further improve corrosion resistance, it is often the case that a surface is subjected to cathodic electrodeposition coating or anodizing, and this is often black in color. While there is a demand for higher precision in these devices, optical noise such as flares and ghosting caused by external light affects the operation of the aforementioned devices, so there is a demand to suppress this. In particular, LiDAR often uses infrared light, and there is a demand for improved optical properties in the infrared wavelength range.

In the field of optical devices, paints such as that taught in JP 2019-101402 A have been widely used as anti-reflective paints.

However, the paint described in JP 2019-101402 A particularly does not take into account reflectance in the infrared wavelength range used in LiDAR devices, and is related to reflectance in the visible light range.

The problem is achieving a further decrease in reflectance at the same time as adhesion to a substrate surface (aluminum member), but prior art does not mention this point.

### SUMMARY OF INVENTION

Therefore, an object of the present invention is to provide an anti-reflective black paint composition that has a favorable anti-reflective property, particularly in the infrared region used in LiDAR devices and the like, and has excellent adhesion to a housing of the above-mentioned devices mainly composed of aluminum.

The anti-reflective black paint composition of the present invention contains a solvent, an epoxy resin, a cationic thermal reaction initiator, a black pigment, and a silica filler, wherein the silica filler includes an air layer therein, and when made into a cured dry paint coat, the reflectance for light having a wavelength of 1,500 nm is 2.5% or less in total light reflectance measurement at an angle of incidence of 8°.

The anti-reflective black paint composition of the present invention has a favorable anti-reflective property, particularly in the infrared region used in LiDAR devices and the like, and has excellent adhesion to a housing of the above-mentioned devices mainly composed of aluminum.

### BRIEF DESCRIPTION OF DRAWINGS

FIG. 1 is a diagram for describing a cross-cut test.
FIG. 2 is a diagram for describing a cross-cut test.

### EMBODIMENT OF INVENTION

A mode of carrying out the present invention (embodiment) will be described in detail below. The present invention is not limited to the content described in the embodiment below. Furthermore, the constituent elements described below include those that a person skilled in the art could easily imagine and those that are substantially identical. Moreover, the configurations described below may be combined as appropriate. Furthermore, various omissions, substitutions, or modifications of the configurations may be made within a scope that does not depart from the scope defined by the present claims.

The anti-reflective black paint composition of the embodiment contains a solvent, an epoxy resin, a cationic thermal reaction initiator, a black pigment, and a silica filler, wherein the silica filler includes an air layer therein. Furthermore, when the anti-reflective black paint composition is made into a cured dry paint coat, the reflectance for light having a wavelength of 1,500 nm is 2.5% or less in total light reflectance measurement at an angle of incidence of 8°. Thus, the cured dry paint coat produced using the anti-reflective black paint composition of the present invention has a favorable anti-reflective property, particularly in the infrared region used in LiDAR devices and the like, and has excellent adhesion to a housing of the above-mentioned devices mainly composed of aluminum. In other words, by coating the anti-reflective black paint composition on an aluminum member used in a LiDAR device or the like, reflection on the surface of the member may be suppressed, and optical noise may be suppressed.

Note that the black low-reflection coat of JP 2019-101402 A includes a porous black pigment having a porosity of 50% or more and a binder component in a ratio of 50:50 to 100:0 (volume ratio), has roughness parameters Rt of 0.15 to 5 µm and Ra of 0.01 to 0.5 µm, an L* value of 20 or less, and at 400 nm to 700 nm, a maximum specular reflectance is 0.8% or less, a maximum diffuse reflectance is 2% or less, and a maximum light transmittance is 5% or less. Furthermore, other applications include products where light leakage is a problem, such as optical devices such as cameras and displays such as televisions. However, JP 2019-101402 A did not originally intend in-vehicle ADAS as an application, and therefore does not teach a low-reflection paint that is sufficient to suppress optical noise. Specifically, in LiDAR, a specular reflectance of 1 to 2% or less is desired at an angle of incidence of 60°, but JP 2019-101402 A proposes 0.8% or less at a lenient angle of incidence of 10° as a condition. The long wavelength region (up to 1,500 nm) should also be mentioned in LiDAR, but JP 2019-101402 A is merely limited to wavelengths of 400 to 700 nm. The problem is how to acheive a further decrease in reflectance at the same time as adhesion to a substrate surface (aluminum member), but JP 2019-101402 A does not mention this point.

A known solvent capable of dissolving an epoxy resin is used as the solvent. Considering that the anti-reflective black paint composition is used by spray coating, the solvent is preferably, for example, toluene, ethyl acetate, PGMAc (propylene glycol monoethyl ether acetate), or the like. The solvent may be a single solvent or a mixture of solvents.

The epoxy resin may be of any type, but it is preferable to use a solid epoxy resin, which is a film-forming component, in combination with a liquid epoxy resin for adjusting the adhesion of the paint coat. A single solid epoxy resin may be used, or two or more types may be used in combination. Furthermore, a single liquid epoxy resin may be used, or two or more types may be used in combination. The solid epoxy resin preferably has a softening point of, for example, more than 90°C so that the paint coat is formable after the solvent is dried. Examples of such a solid epoxy resin include HP-7200HHH (product name) (dicyclopentadiene type epoxy resin. Softening point: 95°C) manufactured by DIC Corporation, JER 1004FS (product name) (bisphenol A type epoxy resin. Softening point: 100°C) and jER 4007 (product name) (bisphenol F type epoxy resin. Softening point: 108°C) manufactured by Mitsubishi Chemical Corporation, and the like. Furthermore, the liquid epoxy resin may be any resin that is liquid at room temperature (25°C), for example. Examples of such a liquid epoxy resin include EPICRON 850-S (product name) (bisphenol A type epoxy resin) manufactured by DIC Corporation, and the like.

A known cationic thermal reaction initiator may be used as the cationic thermal reaction initiator. A single cationic thermal reaction initiator may be used, or two or more types may be used in combination. The cationic thermal reaction initiator may be an initiator used as a photopolymerization initiator. Note that such a photopolymerization initiator may generate acid at high temperatures even without exposure to light, and therefore cure the epoxy resin. From the viewpoint of ensuring that the paint coat exhibits sufficient adhesion, particularly to aluminum (for example, an aluminum alloy such as A5052), a curing procedure may be adopted in which, for example, the solvent is dried at 80°C for 10 minutes, and the epoxy resin is cured at 180°C for 60 minutes. From this viewpoint, it is preferable that the initiation temperature of the cationic thermal reaction initiator, that is, the reaction initiation temperature measured by DSC (Differential Scanning Calorimetry) when the cationic thermal reaction initiator and the epoxy resin are mixed, is, for example, 120°C or higher and 150°C or lower. Examples of the photopolymerization initiator that may be used as the cationic thermal reaction initiator include allylsulfonium salts, allyliodonium salts, allene-ion complexes, quaternary ammonium salts, aluminum chelates, boron trifluoride amine complexes, and the like. Examples of the anion portion of the above salt include PF₆⁻, BF₄⁻, and B(C₆F₅)₄⁻. Specifically, for example, PI-2074 (product name) (allyliodonium salt) manufactured by Rhodia, SAN-AID SI-150L (product name) (allylsulfonium salt) manufactured by Sanshin Chemical Industry Co., Ltd., or the like is suitably used.

A known pigment may be used as the black pigment, and a single black pigment may be used or two or more types may be used in combination. Carbon black is suitably used as the black pigment. From the viewpoint of an anti-reflection effect, an average particle size of the carbon black is preferably 40 nm or more and 60 nm or less. Note that the average particle size is an arithmetic mean size determined by observing carbon black particles under an electron microscope. Examples of such a carbon black is #3050B (product name) (d = 50 nm) manufactured by Mitsubishi Chemical Corporation and the like.

The silica filler is used to reduce reflectance. A silica filler may be used, or two or more types may be used in combination. From the viewpoint of anti-reflection properties, the silica filler has an air layer (void) inside the filler, in particular to diffusely reflect light inside the particle. The phrase "has an air layer (void) inside" used here does not mean that the inside is an air layer and the outer layer is formed of SiO₂ like a balloon. Specifically, the silica filler is preferably one in which air layers are interspersed among spherical solid particles. In other words, it is preferable that a porous layer does not exist on the surface and that a plurality of air particles is contained therein. From the viewpoint of the anti-reflection effect, a volumetric average particle size of the silica filler is preferably 8 µm or more and 12 µm or less. Examples of such a silica filler include HOLLOWY N-15 (product name) manufactured by JGC Catalysts and Chemicals Ltd.

The anti-reflective black paint composition of the embodiment may include, as other components, a dispersant, a thixotropy-imparting agent, an antioxidant, an antifoaming agent, an ultraviolet absorber, a plasticizer, and a leveling agent, as long as the effects of the present invention are not impaired.

The anti-reflective black paint composition preferably includes the epoxy resin in an amount of 45.0% by mass or more and 50.0% by mass or less when the total amount of the components excluding the solvent as a diluting component is taken as 100% by mass as solid content. Furthermore, the cationic thermal reaction initiator is preferably included in an amount of 0.3% by mass or more and 1% by mass or less. Furthermore, the black pigment is preferably included in an amount of 19.0% by mass or more and 22.0% by mass or less. Furthermore, the silica filler is preferably included in an amount of 27.0% by mass or more and 35.7% by mass or less. Furthermore, when the components in the anti-reflective black paint composition are taken as 100 parts by mass, the solvent content being 60.0 parts by mass or more to 67.0 parts by mass or less is preferable from the perspective of having a viscosity suitable for spray coating and obtaining a cured dry paint coat having well-balanced reflective properties.

When the anti-reflective black paint composition of the embodiment is made into a cured dry paint coat, the reflectance for light having a wavelength of 1,500 nm is 2.5% or less in total light reflectance measurement at an angle of incidence of 8°. Furthermore, when the anti-reflective black paint composition of the embodiment is made into a cured dry paint coat, the reflectance for light having a wavelength of 1,500 nm is preferably 0.5% or less in specular reflectance measurement at an angle of incidence of 60°. The anti-reflective black paint composition has the above-mentioned properties when made into a cured dry paint coat, and therefore may exhibit favorable antireflective properties, particularly in the infrared region used in LiDAR devices and the like. Note that conditions for making a cured dry paint coat using the anti-reflective black paint composition when performing total light reflectance measurement and specular reflectance measurement will be described in the examples.

A method for preparing the anti-reflective black paint composition of the embodiment is not particularly limited. For example, a planetary mixing device is used to produce a dispersion in which the black pigment and silica filler are dispersed in the liquid epoxy resin. Furthermore, a dispersion is produced in which the solid epoxy resin and the cationic thermal reaction initiator are dispersed in the solvent. Next, the two dispersions may be mixed to prepare the anti-reflective black paint composition.

In the optical device of the embodiment, a cured dry paint coat of the anti-reflective black paint composition described above is formed at least on the outside or inside of a housing. Furthermore, the optical device of the embodiment is preferably mounted on a vehicle. According to the above cured dry paint coat, a favorable anti-reflective property, particularly in the infrared region used in LiDAR devices and the like is obtained, and excellent adhesion to a housing of the above-mentioned devices mainly composed of aluminum may be exhibited. A thickness of the cured dry paint coat is preferably 20 µm or more and 100 µm or less from the viewpoint of anti-reflection properties and adhesion.

A method for forming the cured dry paint coat is not particularly limited, but the cured dry paint coat may be formed, for example, by a coating step, a solvent drying step, and a thermal curing step. Specifically, in the coating step, the anti-reflective black paint composition is coated on a member of aluminum (for example, an aluminum alloy such as A5052) or the like by spray coating or the like. Next, in the solvent drying step, the solvent in the coated anti-reflective black paint composition is dried and removed. The solvent drying step may be performed, for example, at 80°C or higher and 100°C or lower for 10 minutes or more and 30 minutes or less. Next, the thermal curing step is performed to obtain a cured dry paint coat of uniform thickness. The thermal curing step may be performed, for example, at 150°C or higher and 200°C or lower, for 30 minutes or more and 90 minutes or less. Incidentally, after the solvent drying step, the reaction of the epoxy resin is close to an uncured state, and in consideration of the final formation of a paint coat of uniform thickness, it is desirable that the epoxy resin be in a solid state, that is, not move, at the temperature in the solvent drying step. For this reason, it is preferable that the solid epoxy resin has a softening point exceeding 90°C as described above. Furthermore, since there is a concern that the adhesion may decrease due to solvent residue, it is desirable that the solvent drying temperature conditions be lower than the curing temperature of the epoxy resin (specifically, within the above-mentioned temperature range).

### EXAMPLES

The present invention will be described in more detail below using examples.

### [Examples 1 to 3]

Using a planetary mixing device, a dispersion was produced in which a black pigment (carbon black, d = 50 nm) and a silica filler (in which air layers are interspersed among spherical solid particles) were dispersed in a liquid epoxy resin (bisphenol A type epoxy resin). Furthermore, a dispersion was produced in which a solid epoxy resin (dicyclopentadiene type epoxy resin) and a cationic thermal reaction initiator (allyliodonium salt, the anion portion of the salt being B(C₆F₅)₄⁻) were dispersed in a solvent (propylene glycol monoethyl ether acetate). Next, the two dispersions were mixed to prepare the anti-reflective black paint composition.

Here, the anti-reflective black paint composition was prepared so that each component was included in the amounts shown in Table 1.

### [Comparative Example 1]

Using a planetary mixing device, a dispersion was produced in which a black pigment (carbon black, d = 50 nm) was dispersed in a liquid epoxy resin (bisphenol A type epoxy resin). Furthermore, a dispersion was produced in which a solid epoxy resin (dicyclopentadiene type epoxy resin) and a cationic thermal reaction initiator (allyliodonium salt, the anion portion of the salt being PF₆⁻) were dispersed in a solvent (propylene glycol monoethyl ether acetate). Next, the two dispersions were mixed to prepare a black paint composition.

Here, the black paint composition was prepared so that each component was included in the amounts shown in Table 1.

### [Comparative Examples 2 to 4]

A black paint composition was prepared in the same manner as in Comparative Example 1, except that the black paint composition was prepared so that each component was included in the amounts shown in Table 1.

### [Comparative Example 5]

A black paint composition was prepared in the same manner as in Example 1, except that a black pigment (carbon black, d = 80 nm) was used instead of the black pigment (carbon black, d = 50 nm), and the black paint composition was prepared so that each component was included in the amounts shown in Table 1.

### [Comparative Example 6]

A black paint composition was prepared in the same manner as in Example 1, except that a black pigment (carbon black, d = 28 nm) was used instead of the black pigment (carbon black, d = 50 nm), and the black paint composition was prepared so that each component was included in the amounts shown in Table 1.

### [Comparative Example 7]

A black paint composition was prepared in the same manner as in Example 1, except that a black pigment (carbon black, d = 26 nm) was used instead of the black pigment (carbon black, d = 50 nm), and the black paint composition was prepared so that each component was included in the amounts shown in Table 1.

### [Comparative Example 8]

A black paint composition was prepared in the same manner as in Example 1, except that the black paint composition was prepared so that each component was included in the amounts shown in Table 1.

### [Comparative Example 9]

A black paint composition was prepared in the same manner as in Example 1, except that a silica filler (in which air layers are not interspersed among spherical solid particles) was used instead of the silica filler (in which air layers are interspersed among spherical solid particles), and the black paint composition was prepared so that each component was included in the amounts shown in Table 1.

### [Comparative Example 10]

A black paint composition was prepared in the same manner as in Example 1, except that the black paint composition was prepared so that each component was included in the amounts shown in Table 1.

### [Measurement Method]

### <Total Light Reflectance>

The anti-reflective black paint compositions of Examples 1 to 3 were used to produce cured dry paint coats. Specifically, in the coating step, the anti-reflective black paint composition was coated on an aluminum alloy plate by spray coating. Next, in the solvent drying step, the solvent in the coated anti-reflective black paint composition was dried and removed. The solvent drying step was performed at conditions of 80°C and 10 minutes. Next, the thermal curing step was performed to obtain a cured dry paint coat of 20 µm thickness. The thermal curing step was performed at conditions of 180°C and 60 minutes.

Furthermore, the black paint compositions of Comparative Examples 1 to 10 were used to produce cured dry paint coats in the same manner as above.

The obtained cured dry paint coats were used to measure total light reflectance. The measurement was performed using a UH-4150 manufactured by Hitachi High-Tech at an angle of incidence of 8 degrees over a wavelength range of 300 nm to 2,000 nm in 1 nm increments. In this manner, the reflectance for light having a wavelength of 1,500 nm was determined in the total light reflectance measurement at an angle of incidence of 8°.

### <Specular Reflectance>

In the same manner as in the measurement of the total light reflectance, the anti-reflective black paint compositions of Examples 1 to 3 were used to produce cured dry paint coats.

Furthermore, in the same manner as in the measurement of the total light reflectance, the black paint compositions of Comparative Examples 1 to 10 were used to produce cured dry paint coats.

The obtained cured dry paint coats were used to measure specular reflectance. The measurement was performed using a V-770 manufactured by JASCO Corporation at an angle of incidence of 60 degrees over a wavelength range of 200 nm to 1,500 nm in 1 nm increments. In this manner, the reflectance for light having a wavelength of 1,500 nm was determined in the specular reflectance measurement at an angle of incidence of 60°.

### [Cross-cut Test]

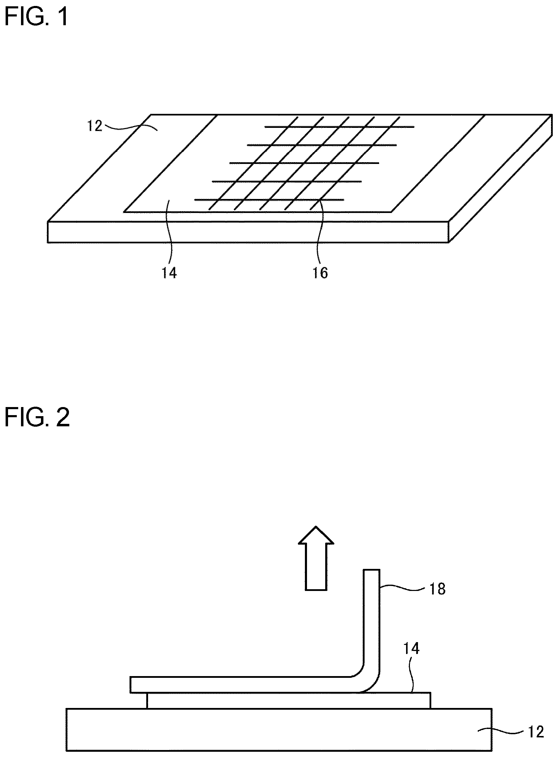

To evaluate adhesion to an aluminum alloy member, a cross-cut test was performed in accordance with ISO 9211-4. Note that FIG. 1 and FIG. 2 are diagrams for describing the cross-cut test.

First, on an aluminum alloy plate 12, in the same manner as in the measurement of the total light reflectance, the anti-reflective black paint composition of Example 1 was used to produce a cured dry paint coat 14. Using a cutting guide tool and a cutter, 100 squares 16 were produced in the cured dry paint coat 14 (FIG. 1). Next, a tape 18 (manufactured by Nichiban Co., Ltd., Nichiban No. 405 (product name), width: 24 mm, adhesive strength: 4.73 N/10 mm) was attached to the cured dry paint coat 14 and then peeled off vertically (FIG. 2). The appearance after the tape was peeled off was checked. For evaluation, when there was no detachment, a pass (⊚) was determined and when there was even partial detachment, a fail (×) was determined.

Table 1 below shows the results of the cross-cut test, together with the measurement results of the total light reflectance and specular reflectance.

**Table 1**

| Table 1 | | | | | | | |
|---|---|---|---|---|---|---|---|
| | Example 1 | Example 2 | Example 3 | Comparative Example 1 | Comparative Example 2 | Comparative Example 3 | Comparative Example 4 |
| Solid epoxy resin (mass%) | 16.7 | 16.9 | 16.3 | 16.0 | 16.2 | 15.8 | 15.5 |
| Liquid epoxy resin (mass%) | 1.3 | 1.3 | 1.3 | 1.3 | 1.3 | 1.3 | 1.2 |
| Carbon black (d = 50 nm) (mass%) | 7.9 | 8.0 | 7.7 | 7.5 | 6.1 | 8.9 | 10.2 |
| Carbon black (d = 80 nm) (mass%) | | | | | | | |
| Carbon black (d = 28 nm) (mass%) | | | | | | | |
| Carbon black (d = 26 nm) (mass%) | | | | | | | |
| Silica filler (mass%) Spherical solid particles having air layers interspersed therein | 11.5 | 10.5 | 13.3 | | | | |
| Silica filler (mass%) Spherical solid particles having no air layers interspersed therein | | | | | | | |
| Solvent (mass%) | 62.5 | 63.2 | 61.3 | 75.0 | 76.2 | 73.9 | 72.9 |
| Cationic thermal reaction initiator (mass%) | 0.1 | 0.1 | 0.1 | 0.1 | 0.1 | 0.1 | 0.1 |
| Total light reflectance (angle of incidence 8°, 1,500 nm) | 2.2 | 2.5 | 2.2 | 4.1 | 5.9 | 3.7 | - |
| Specular reflectance (angle of incidence 60°, 1,500 nm) | <0.2 | <0.2 | <0.2 | 3.6 | 6.2 | 3.7 | - |
| Cro ss-cut test | ⊚ | ⊚ | ⊚ | ⊚ | - | - | × |

| Table 1 | | | | | | |
|---|---|---|---|---|---|---|
| | Comparative Example 5 | Comparative Example 6 | Comparative Example 7 | Comparative Example 8 | Comparative Example 9 | Comparative Example 10 |
| Solid epoxy resin (mass%) | 14.4 | 14.4 | 14.4 | 14.4 | 16.5 | 17.0 |
| Liquid epoxy resin (mass%) | 1.1 | 1.1 | 1.1 | 1.1 | 1.3 | 1.4 |
| Carbon black (d = 50 nm) (mass%) | | | | 6.8 | 7.8 | 8.0 |
| Carbon black (d = 80 nm) (mass%) | 6.8 | | | | | |
| Carbon black (d = 28 nm) (mass%) | | 6.8 | | | | |
| Carbon black (d = 26 nm) (mass%) | | | 6.8 | | | |
| Silica filler (mass%) | 9.9 | 9.9 | 9.9 | 9.9 | | 9.6 |
| Spherical solid particles having air layers interspersed therein | | | | | | |
| Silica filler (mass%) | | | | | 12.4 | |
| Spherical solid particles having no air layers interspersed therein | | | | | | |
| Solvent (mass%) | 67.6 | 67.6 | 67.6 | 67.6 | 61.9 | 63.9 |
| Cationic thermal reaction initiator (mass%) | 0.1 | 0.1 | 0.1 | 0.1 | 0.1 | 0.1 |
| Total light reflectance (angle of incidence 8°, 1,500 nm) | 3.4 | 4.6 | 3.7 | 4.1 | 1.9 | 3.0 |
| Specular reflectance (angle of incidence 60°, 1,500 nm) | - | - | - | <0.2 | - | <0.2 |
| Cross-cut test | - | - | - | ⊚ | × | ⊚ |

Note that in Comparative Example 4, the total light reflectance and specular reflectance were not measured because the results of the cross-cut test were poor. Were total light reflectance performed, the reflectance is thought to have exceeded 2.5%. In Comparative Examples 5 to 7, the total light reflectance was high to begin with, so the specular reflectance was not measured.

## Claims

1. An anti-reflective black paint composition comprising:
a solvent;
an epoxy resin;
a cationic thermal reaction initiator;
a black pigment; and
a silica filler, wherein
the silica filler has an air layer therein, and
when made into a cured dry paint coat, a reflectance for light having a wavelength of 1,500 nm is 2.5% or less in total light reflectance measurement at an angle of incidence of 8°.

2. The anti-reflective black paint composition according to claim 1, wherein, when made into a cured dry paint coat, the reflectance for light having a wavelength of 1,500 nm is 0.5% or less in specular reflectance measurement at an angle of incidence of 60°.

3. The anti-reflective black paint composition according to claim 1, wherein the black pigment is carbon black, and an average particle size thereof is 40 nm or more and 60 nm or less.

4. The anti-reflective black paint composition according to claim 1, wherein the epoxy resin comprises a solid epoxy resin and a liquid epoxy resin.

5. An optical device, wherein the cured dry paint coat of the anti-reflective black paint composition according to claim 1 is formed on at least an outside or inside of a housing thereof.

6. The optical device according to claim 5, wherein the optical device is for mounting on a vehicle.

## Patentansprüche

1. Antireflexschwarzlackzusammensetzung, umfassend:
ein Lösungsmittel;
ein Epoxidharz;
einen kationischen thermischen Reaktionsinitiator;
ein Schwarzpigment; und
einen Siliciumdioxid-Füllstoff, wobei
der Siliciumdioxid-Füllstoff eine Luftschicht darin aufweist, und
bei Verarbeitung der Zusammensetzung zu einer ausgehärteten Trockenlackbeschichtung ein Reflexionsgrad für Licht mit einer Wellenlänge von 1500 nm bei einer Messung des Gesamtlichtreflexionsgrads unter einem Einfallswinkel von 8° höchstens 2,5 % beträgt.

2. Antireflexschwarzlackzusammensetzung nach Anspruch 1, wobei bei Verarbeitung der Zusammensetzung zu einer ausgehärteten Trockenlackbeschichtung der Reflexionsgrad für Licht mit einer Wellenlänge von 1500 nm bei einer Messung des gerichteten Reflexionsgrads unter einem Einfallswinkel von 60° höchstens 0,5 % beträgt.

3. Antireflexschwarzlackzusammensetzung nach Anspruch 1, wobei das Schwarzpigment Industrieruß ist und dessen durchschnittliche Partikelgröße 40 nm oder mehr und 60 nm oder weniger beträgt.

4. Antireflexschwarzlackzusammensetzung nach Anspruch 1, wobei das Epoxidharz ein festes Epoxidharz und ein flüssiges Epoxidharz umfasst.

5. Optische Vorrichtung, wobei die ausgehärtete Trockenlackbeschichtung der Antireflexschwarzlackzusammensetzung nach Anspruch 1 auf mindestens einer Außenseite oder Innenseite eines Gehäuses dieser gebildet ist.

6. Optische Vorrichtung nach Anspruch 5, wobei die optische Vorrichtung zum Montieren an einem Fahrzeug dient.

## Revendications

1. Composition de peinture noire antireflet comprenant :
un solvant ;
une résine époxy ;
un initiateur de réaction thermique cationique ;
un pigment noir ; et
une charge de silice, dans laquelle la charge de silice présente une couche d'air en son sein, et
lorsqu'elle est transformée en une couche de peinture durcie et séchée, une réflectance pour la lumière présentant une longueur d'onde de 1 500 nm est de 2,5 % ou moins dans une mesure de la réflectance totale de la lumière à un angle d'incidence de 8°.

2. Composition de peinture noire antireflet selon la revendication 1, dans laquelle, lorsqu'elle est transformée en une couche de peinture durcie et séchée, la réflectance pour la lumière présentant une longueur d'onde de 1 500 nm est de 0,5 % ou moins dans une mesure de la réflectance spéculaire à un angle d'incidence de 60°.

3. Composition de peinture noire antireflet selon la revendication 1, dans laquelle le pigment noir est du noir de carbone, et sa taille moyenne de particules est de 40 nm ou plus et de 60 nm ou moins.

4. Composition de peinture noire antireflet selon la revendication 1, dans laquelle la résine époxy comprend une résine époxy solide et une résine époxy liquide.

5. Dispositif optique, dans lequel la couche de peinture durcie et séchée de la composition de peinture noire antireflet selon la revendication 1 est formée sur au moins l'extérieur ou l'intérieur de son boîtier.

6. Dispositif optique selon la revendication 5, dans lequel le dispositif optique est destiné à être monté sur un véhicule.
